# EUROPEAN PATENT APPLICATION

(11) **EP 3 176 028 A1**
(43) Date of publication of application: **07.06.2017**
(21) Application number: 16201611.7
(22) Date of filing: 01.12.2016
(51) Int. Cl.: B60N 2/48

(54) **MULTI-DIRECTIONAL TRANSLATIONAL HEAD RESTRAINT**

(30) Priority: 04.12.2015 US 201562263233 P; 14.11.2016 US 201615350908
(71) Applicant: Windsor Machine and Stamping 2009 Ltd, Windsor, ON N9A 6J3 (CA)
(72) Inventor: BROCKMAN, Mark Anthony, Windsor, ON, N9A 6J3 (CA); LITTLE, Mark Leonard, Windsor, ON, N9A 6J3 (CA)
(74) Representative: Delorme, Nicolas

(57) **Abstract**

A head restraint assembly (10) includes a base portion (14) mountable to a vehicle seat, the base portion including at least one post portion (18) extending in a substantially vertical direction, the at least one post portion having a plurality of notches therealong. Also included is a head restraint (30) operatively coupled to the base portion. Further included is a first pin (52, 54) extending in a fore-aft direction, the first pin having a plurality of notches therealong. Yet further included is a cross member (58) having at least one first protrusion engageable with the notches of the post portion and at least one second protrusion engageable with the notches of the first pin. Also included is a push button (68) in operable contact with the cross member to translate the cross member to disengage the first protrusion and the second protrusion from the respective notches to allow translation of the head restraint assembly.

## Description

### CROSS-REFERENCE TO RELATED APPLICATION

This patent application claims priority to U.S. Provisional Application No. 62/263,233, filed December 4, 2015, which is incorporated herein by reference in its entirety.

### FIELD OF THE INVENTION

The subject matter disclosed herein relates to vehicle head restraints and, more particularly, to a vehicle head restraint that is translatable in multiple directions.

### BACKGROUND OF THE INVENTION

Many vehicles, such as automobiles, include a headrest or head restraint atop an occupant's seat and in a position adjacent the occupant's head. Head restraints are typically cushioned for comfort, are height adjustable, and most are commonly finished in the same material as the rest of the seat. Design and assembly of head restraints require consideration of assembly structural integrity. Several challenges are involved with ensuring the desired structural integrity.

### BRIEF DESCRIPTION OF THE INVENTION

According to one aspect of the invention, a head restraint assembly includes a base portion mountable to a vehicle seat, the base portion including at least one post portion extending in a substantially vertical direction, the at least one post portion having a plurality of notches therealong. Also included is a head restraint operatively coupled to the base portion. Further included is a first pin extending in a fore-aft direction, the first pin having a plurality of notches therealong. Yet further included is a cross member having at least one first protrusion engageable with the notches of the post portion and at least one second protrusion engageable with the notches of the first pin. Also included is a push button in operable contact with the cross member to translate the cross member to disengage the first protrusion and the second protrusion from the respective notches to allow translation of the head restraint assembly.

According to another aspect of the invention, a head restraint assembly includes a base portion having at least one post portion. Also included is a head restraint operatively coupled to the at least one post portion. Further included is a push button, the head restraint translatable in a first direction and translatable in a second direction upon manual depression of the push button by a user.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a front perspective view of a head restraint;
FIG. 2 is a rear perspective view of the head restraint;
FIG. 3 is a perspective view of the head restraint with a cover removed to illustrate a housing;
FIG. 4 is a perspective view of the head restraint with the cover and housing removed;
FIG. 5 is a top view of the head restraint with the cover and housing removed;
FIG. 6 is a front perspective view of the head restraint according to another aspect of the invention;
FIG. 7 is a rear perspective view of the head restraint according to another aspect of the invention; and
FIG. 8 is a sectional view of the head restraint according to another aspect of the invention.

The detailed description explains embodiments of the invention, together with advantages and features, by way of example with reference to the drawings.

### DETAILED DESCRIPTION OF THE INVENTION

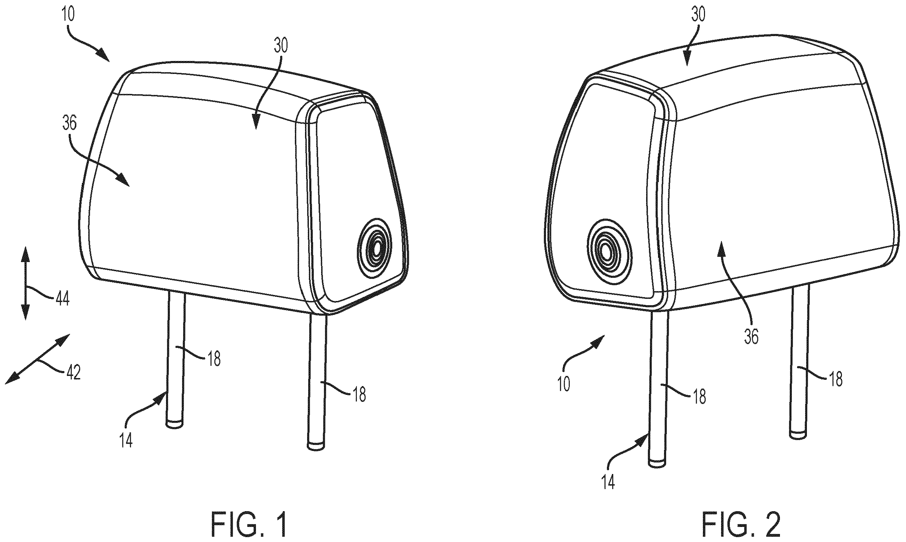

Referring FIGS. 1 and 2, a head restraint assembly 10 is schematically depicted. The head restraint assembly 10 includes a base portion 14 that is mountable to a vehicle seat (not illustrated), and, more specifically, to the upper portion of the seatback of the vehicle seat. In the illustrated embodiment, the base portion 14 includes two post members 18 that are mounted, or mountable, to the top of the seatback of the vehicle seat, as understood by those skilled in the art. Each of the post members 18 extends into a respective hole formed in the top of the seatback to attach the head restraint assembly 10 to the vehicle seat.

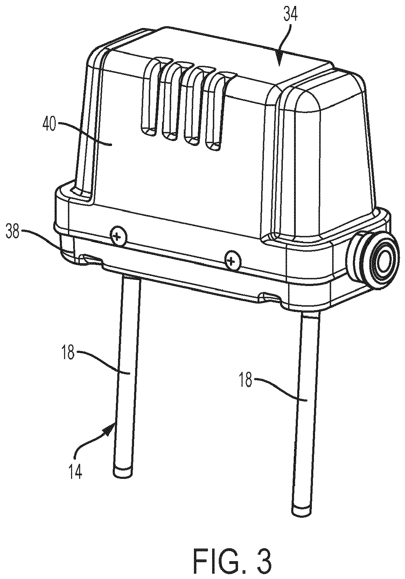

The head restraint assembly 10 further includes a head restraint 30 mounted with respect to the base portion 14. The head restraint 30 includes a housing 34 (FIG. 3) that provides rigid structure to the head restraint 30 and partially encloses a number of components, as will be described in detail below. The head restraint 30 also includes cushion and a head restraint cover 36 that are mounted with respect to the housing 34 for movement therewith. The head restraint cushion is comprised of a soft foam material or a like material to provide a cushion between the head of a human occupant of the vehicle seat and the housing 34. The head restraint cover covers at least part of the cushion and the housing to enhance the aesthetics of the head restraint. Exemplary cover materials include cloth, vinyl, leather, etc.

The housing 34 includes a lower housing portion 38 and an upper housing portion 40. The lower housing portion 38 is operatively coupled to the base portion 14 such that the housing 34 (and the rest of the head restraint 30, including the cushion and cover) is selectively translatable in at least one plane with respect to the base portion 14 and, therefore, is also selectively translatable with respect to the seatback portion of the vehicle seat. More specifically, the head restraint 30 is mounted with respect to the base portion 14 and selectively translatable with respect to the base portion 14. As will be understood from the description herein, the head restraint 30 is translatable in at least one direction. Movement in a direction represented by directional indicator 42 and a direction represented by directional indicator 44 is described and illustrated, but it is to be appreciated that the head restraint is moveable in both directions 42, 44, separately or simultaneously, as desired by a user. The directions 42, 44 correspond to substantially horizontal and substantially vertical in some embodiments. In some embodiments, the directions 42, 44 are perpendicular to each other.

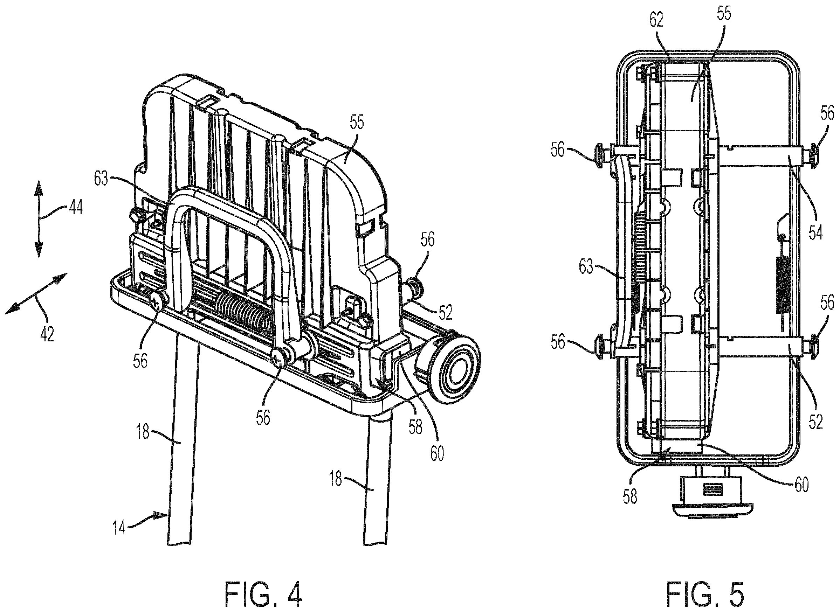

FIGS. 4 and 5 illustrate the head restraint 30 with the cover 36 and housing 34 removed to illustrate components housed therein. At least one tubular member, such as the illustrated first tubular member 52 and second tubular member 54, extends in a fore-aft direction that substantially corresponds to direction 42. The tubular members 52, 54 include internal threaded regions at distal ends thereof to each threadingly receive a threaded fastener 56. The fasteners 56 extend through the housing 34 (FIG. 3). The tubular members 52, 54 extend through a cross member 58 to provide support for the cross member 58 and to accommodate fore-aft translation along direction 42. The cross member 58 extends from a first end 60 to a second end 62 and receives the post members 18 of base portion 14 therethrough. The cross member 58 is housed within an aperture of a frame 55 in a telescoping manner. A steel brace 63 is operatively coupled to the first and second tubular members 52, 54.

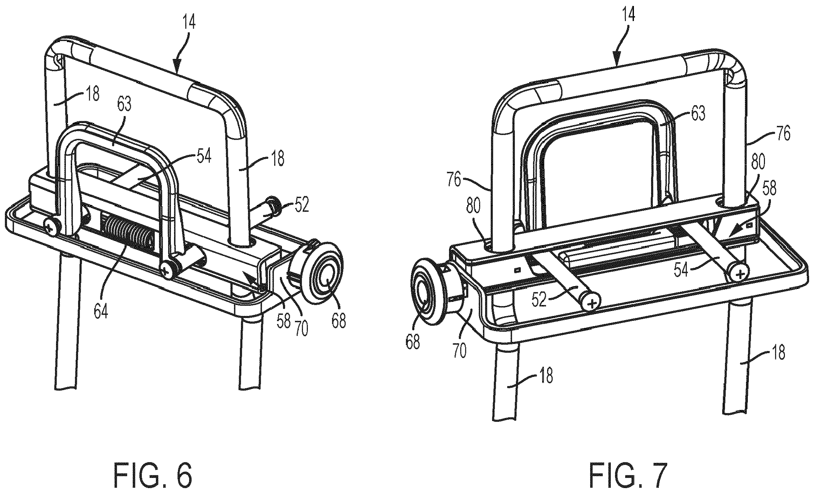

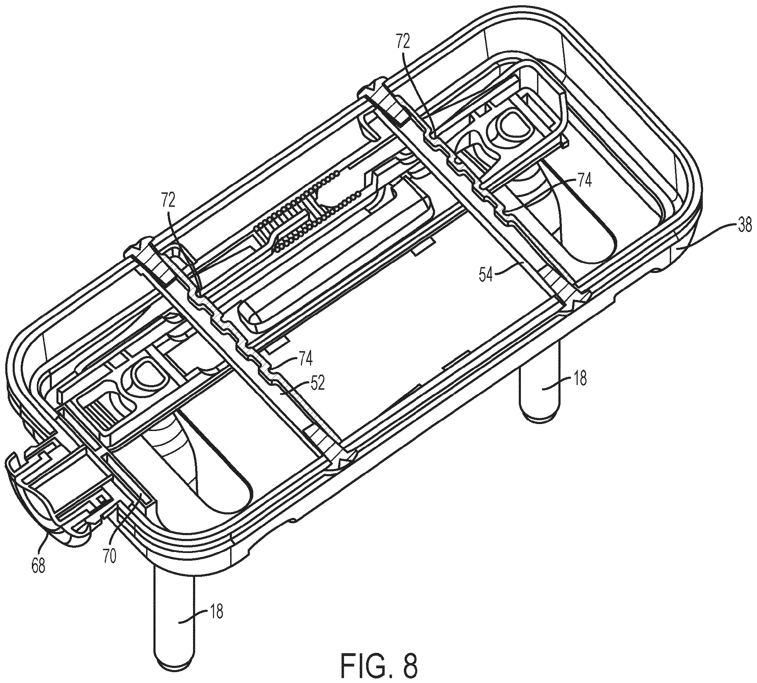

Referring now to FIGS. 6-8, the cross member 58 is biased toward the first end 60 with a biasing member, such as a coil spring 64. Extending through the housing 34 is a push button 68 that is moveable to bias the cross member 58 in a manner that overcomes the spring force of spring 64 to translate the cross member 58. An intermediate element 70 is disposed between the push button 68 and the cross member 58 to provide a flange that is capable of transferring the force applied with the push button 68 to the cross member 58. This allows force transfer over a full range of head restraint positions. For example, when the head restraint 30 is a fully forward or rearward position, the intermediate element 70 allows for force transfer even when the push button and the cross member 58 are not aligned.

In operation, as the cross member 58 is translated with the push button 68, a first locking protrusion 72 is biased out of engagement with one of a plurality of notches 74 of the tubular member(s) 52, 54. The first locking protrusion 72 may be integrally formed with the cross member 58 or the frame 55. Once biased out of the notch 74, the head restraint 30 is free to be translated in direction 42. Upon reaching the desired fore-aft location, the push button 68 is released and the protrusion 72 is engaged with one of the plurality of notches 74 to lock the head restraint 30 into position. Similarly, posts 18 of base portion 14 include a plurality of notches 76 that are engageable with a portion (e.g., second protrusion(s) 80) of the cross member 58 and/or frame 55. Once biased out of the notch 76, the head restraint 30 is free to be translated in direction 44. Upon reaching the desired vertical location, the push button 68 is released and the protrusion 80 is engaged with one of the plurality of notches 76 to lock the head restraint 30 into position.

Advantageously, minimal effort is required to translate the head restraint 30 in two directions 42, 44 with operation of the push button 68.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A head restraint assembly comprising:
a base portion mountable to a vehicle seat, the base portion including at least one post portion extending in a substantially vertical direction, the at least one post portion having a plurality of notches therealong;
a head restraint operatively coupled to the base portion;
a first pin extending in a fore-aft direction, the first pin having a plurality of notches therealong;
a cross member having at least one first protrusion engageable with the notches of the post portion and at least one second protrusion engageable with the notches of the first pin; and
a push button in operable contact with the cross member to translate the cross member to disengage the first protrusion and the second protrusion from the respective notches to allow translation of the head restraint assembly.

2. The head restraint assembly of claim 1, wherein the notches of the first pin and the first protrusion of the cross member lock the head restraint in a first direction, the notches of the post portion and the second protrusion of the cross member locking the head restraint in a second direction.

3. The head restraint assembly of claim 2, wherein the first direction and the second direction are perpendicular to each other.

4. The head restraint assembly of claim 1, further comprising a biasing member biasing the cross member toward the push button.

5. The head restraint assembly of claim 4, wherein the biasing member is a coil spring.

6. The head restraint assembly of claim 1, wherein the at least one post portion consists of a first post portion and a second post portion.

7. The head restraint assembly of claim 6, wherein each of the first and second post portions include notches for receiving the at least one first protrusion.

8. The head restraint assembly of claim 6, wherein the first and second post portions each extend through apertures of the cross member.

9. The head restraint assembly of claim 1, further comprising a plurality of pins extending in the fore-aft direction, each of the plurality of pins having a plurality of notches therealong for receiving the at least one second protrusion.

10. The head restraint assembly of claim 9, wherein each of the plurality of pins extend through the cross member.

11. The head restraint assembly of claim 1, further comprising a housing having a lower housing portion and an upper housing portion.

12. The head restraint assembly of claim 11, wherein the upper housing portion and the lower housing portion are moveable relative to each other.

13. The head restraint assembly of claim 11, wherein the lower housing portion comprises a flange disposed between the push button and the cross member.

14. The head restraint assembly of claim 13, wherein the flange is in abutment with the push button and the cross member.

15. A head restraint assembly comprising:
a base portion having at least one post portion;
a head restraint operatively coupled to the at least one post portion; and
a push button, the head restraint translatable in a first direction and translatable in a second direction upon manual depression of the push button by a user.
